Europäisches Patentamt

European Patent Office

Office européen des brevets

(11) Publication number : **0 625 314 A2**

# EUROPEAN PATENT APPLICATION

(21) Application number : **94500071.9**

(22) Date of filing : **19.04.94**

(51) Int. Cl.⁵ : **A23L 3/40, A23L 3/42,**
**A23L 3/015, A23B 7/08,**
**A23B 7/02, A23B 7/022,**
**A23B 4/03, A23B 4/033**

(30) Priority : **20.04.93 ES 9300805**

(43) Date of publication of application :
**23.11.94 Bulletin 94/47**

(84) Designated Contracting States :
**AT BE CH DE DK FR GB GR IE IT LI LU NL PT**

(71) Applicant : **UNIVERSIDAD POLITECNICA DE VALENCIA**
**Camino de Vera s/n**
**E-46022 Valencia (ES)**

(72) Inventor : **Fito Maupoey, Pedro**
**Soto de Camarera,**
**Sector A no. 18**
**E-46117 Betera (Valencia) (ES)**

Inventor : **Chiralt Boix, Amparo**
**Soto de Camarera,**
**Sector A no. 18**
**E-46117 Betera (Valencia) (ES)**
Inventor : **Serra Belenguer, Juan Antonio**
**c/ Serpis no. 82**
**E-46022 Valencia (ES)**
Inventor : **Mata Montes de Oca, Miguel**
**Avda. Blasco Ibanez no. 153**
**I-46022 Valencia (ES)**
Inventor : **Quan Shi, Xian**
**Avda. Blasco Ibanez no. 153**
**E-46022 Valencia (ES)**
Inventor : **Pastor Del Castillo, Mary Ann Rita**
**c/ Escalante no. 345**
**E-46011 Valencia (ES)**

(74) Representative : **Gomez-Acebo y Pombo, José Miguel**
**c/o CLARKE, MODET & Co.,**
**Avda. de los Encuartes, No. 21**
**E-28760 Tres Cantos (Madrid) (ES)**

(54) **An alternating flow procedure to improve liquid exchanges in food products and equipment for carrying out said procedure.**

(57) The procedure uses the osmotic dehydration of food by means of a controlled alternating change of pressures in order to improve the exchanges of water and solutes between the food and a surrounding liquid medium. Vacuum is used to drive the air out of the pores and refill them at the end of the process ; the changes in pressure are used as a means of pumping the solution inside the pores, it being possible to carry out said pumping once (in general in the case of preserves) or repeatedly (in the case of salting food) ; the duration of each vacuum pulse is 1/2 or less than the duration of the process, which is between 1 and 10 hours, with working temperatures of between 8 and 20°C lower than in the case of conventional processes as well as times which are 2 to 4 times shorter, thereby providing a considerable improvement in terms of maintaining the taste, aroma and nutritional components. Equipment for carrying out the process is also described.

Fig. 8

EP 0 625 314 A2

FIELD

Preservation of fruit and vegetables by dehydration (A23B7/02)
Dehydration of meat and fish products (CO1G7/04.. A23C19/06)
Acceleration of the processes of salting and obtaining preserves (A23B7/08..A23C19/06)
Apparatus for the tinned-food industry (A23B4/00../02)

BACKGROUND OF THE INVENTION

The safe preservation of food from a health point of view, whilst maintaining its nutritional and organoleptic characteristics, is one of the basic objectives of food processing. Suitable control of the "water activity", denoted $a_W$, constitutes one of the alternatives for preserving these products. Dehydration, and in particular osmotic dehydration, constitutes a preservation technique which, compared with the techniques based on heat treatment, does not cause the destruction of the principle thermolabiles, does not have the same energy costs as low temperature conservation systems and does not require preserving additives.

Improved knowledge regarding the behaviour of water in food is helping to identify the best conditions for carrying out water activity reduction processes. In recent years various authors [Le Maguer, M. "Osmotic Dehydration: Review and Future Directions". Proc. Symposium on progress in Food Preservation Processes (1):183-309 (1988); Raoult-Wack, A. "Les procédés de deshydration - Impregnation par immersion dans des solutions concentrées (DII). Etude experimentale et modelisation des transferts d'eau et de solute sur gel modèle". Ph.D. Université Montpellier II, France (1991)] have studied the osmotic dehydration of food, in particular that of fruit and vegetables, demonstrating its advantages and drawbacks.

Attempts have also been made to model the transport phenomena which take place during this operation. It is therefore worth mentioning the works of Tyree [Tyree, M.T. "The symplast concept. A general theory of symplastic transport according to the thermodynamics of irreversible process. J.Theor.Biol. 26:181-189 (1970)], Toupin and Le Maguer [Toupin C.J. and Le Maguer M. "Osmotically induced mass transfer in plant storage tissues: a mathematical model - part 2. J.of Food Eng. 10:97-121 (1989)], Toupin [Toupin, C.J., Marcotte M., LeMaguer M. "Osmotically induced mass transfer in plant storage tissues: a mathematical model - part 2. J.of Food Eng., 10:13-38 (1989)], Marcotte et al. [Marcotte M., Toupin C.J., Le Maguer M., "Mass transfer in cellular tissues; part 1. The mathematical model", J.of Food Eng. 13;199 (1991)], Raoult-Wack [Raoult-Wack, A. "Les procédés de Deshydration - Impregnation par immersion dans des solutions concentrées (DII). Etude experimentale et modelisation des transferts d'eau et de solute sur gel modèle". Ph.D. Université Montpellier II, France (1991)] and Marcotte and Le Maguer [Marcotte M., Le Maguer M.. "Mass transfer in cellular tissues; part 2. Computer simulations vs: experimental data" J.of Food Eng. 17;177 (1992)].

Some authors, such as Zozulevich and D'yachenko [Zozulevich, B.V. and D'yachenko E.N., "Osmotic Dehydration of fruits". Konservn Ovoshchesusch. Prom., 7;32-42 (1969)] and Hawkes and Flink [Hawkes J. and Flink J.M., "Osmotic Concentration of fruits slices prior to freeze dehydration" J. Food Proc. Pres., 2;265-284 (1978) and Dalla Rosa et al. [Dalla Rosa M., Pinnavaia G., Lerici C.R., "La disidratazione della frutta mediante osmosi diretta. Notta II. Esperienze di laborotorio su alcumi generi di frutta". Industria Conserve, 57;3-7 (1982)] have shown that under conditions of vacuum accelerated dehydration kinetics are obtained.

At this point it is worth mentioning a number of patents which deal with the subject, among them the French patent FR 8210373 (11/6/82) by C. Agulhon for Royal Champignon entitled "Procedure for improving the performance and quality of mushroom preserves" in which osmotic dehydration is carried out after creating a vacuum in a container inside which the mushrooms are submerged in a saline solution. The procedure, nevertheless, attempts to avoid enzymatic oxidation in the subsequent baking process by eliminating the contained air, as well as to increase the drained weight of the product.

BRIEF DESCRIPTION OF THE INVENTION

The object of the present invention is, by means of a controlled alternating change of pressures, to improve the exchanges of water and solutes between the food and a surrounding liquid medium. Unlike in the state of the art, where a vacuum (50 to 150 mbar absolute) is used to drive the air out of the pores and refill them at the end of the process, in this case the change in pressure is used as a means of pumping the solution inside the pore, it being possible to carry out said pumping once (in general in the case of preserves) or repeatedly (in the case of salting food).

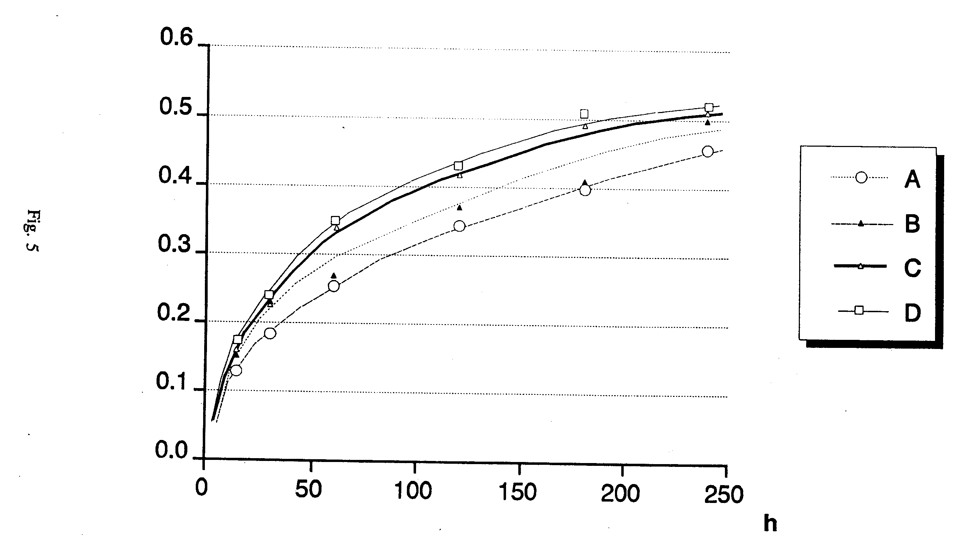

If the pumping system is carried out only once, the food dehydration results obtained (see figure 5) are statistically the same as those obtained by osmotic dehydration in a vacuum. The difference is that the time for which the vacuum has to be used is reduced considerably, representing an obvious advantage.

When the aim is to introduce the solute into the food (simultaneously eliminating the water by osmosis) the repetition of the cycle causes the solution contained within the pore, which is made more dilate by the osmotic effect, to be replaced by the concentrated solution which surrounds it. In this way, in the case of the salting of food, as the volume of the pores of the food is small and the saline concentration of the solution has a limit of solubility, it is possible to achieve similar levels of salting to those obtained by conventional salting methods in times of the order of 10 times less.

The duration of each vacuum pulse is 1/2 or less than the duration of the process, which is between 1 and 10 hours depending on the characteristics of the food and the treatment which is carried out (dehydration or salting).

The invention also includes a description of the equipment necessary to carry out the process.

## DETAILED DESCRIPTION OF THE INVENTION

The porous nature of food plays a fundamental part in the transfer of mass which takes place during the vacuum operations. The presence of pores in the food may be due to a number of factors. In some types of fruit, such as apples, the presence of intercellular spaces are characteristics of the soft tissue [Trakoontivakorn G., Patterson M.E. and Swnasoo B.G. "Scanning Electron Microscopy of Cellular Structure of Granny Smith and Red Delicious Apples". Food Microstructure 7;205-212 (1988)]. This type of study has been carried out on different kinds fruit in which the relationship between structure, structural parameters and operational variables has been examined.

**Hydrodynamic modelling**

Given the importance of the modelling of the process in order to interpret the results obtained with the present invention and in order to compare its advantages, it is necessary to include herein the corresponding treatment which enables the porosity of a food, $e_e$, to be defined experimentally as a function of the pressure used for osmotic dehydration.

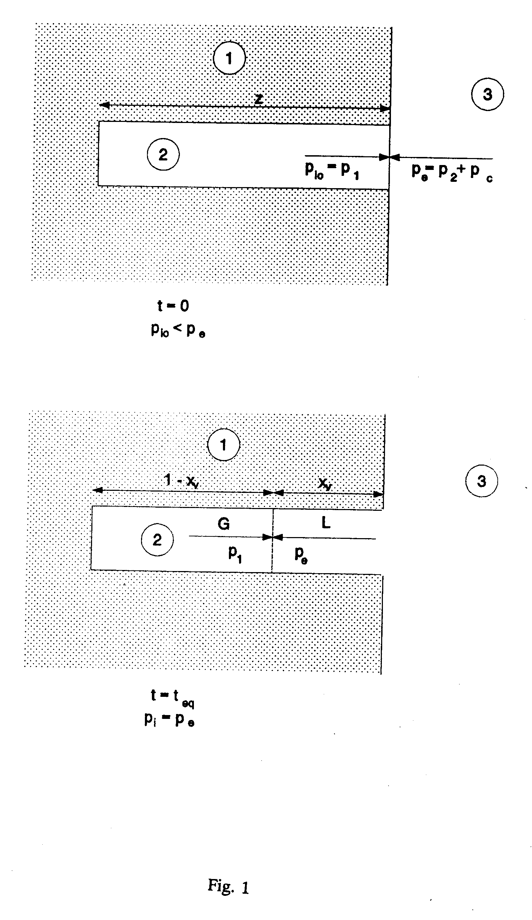

Figure 1 shows schematically an ideal situation in which a pore is represented by a cylinder of constant diameter D and length z. It is assumed that the interior of the pore is filled by a gas at a pressure $p_1$ whilst outside is a liquid at a pressure $p_e$. This pressure is equal to the pressure of the system $p_2$ plus the capillary pressure $p_c$

$$p_e = p_2 + p_c$$

which can be calculated by the Young-Laplace equation:

$$P_c = \frac{8\sigma}{D^2}$$

where $\sigma$ is the surface tension.

The depth of penetration of the of the liquid inside the pore is expressed as a function of the fraction of the volume of the pore, $x_v$, which is occupied by the liquid. The increase in pressure or impulsive force reduces gradually as a result of the increase in $p_1$ when the gas is compressed. Assuming that the compression is isothermic:

$$-\Delta p = p_e - \frac{p_{io}}{1 - x_v}$$

where $p_{io}$ is the initial pressure of the gas.

The value of $x_v$ when the equilibrium condition is reached ($\Delta p = 0$) is given by

$$x_v = \frac{p_e - p_{io}}{p_e}$$

and since then

$$p_{io} = p_i$$

by substituting the value of $p_e$ we obtain:

$$x_v = \frac{p_2 + p_c - p_1}{p_2 + p_c}$$

which can be simplified to:

$$x_v = 1 - \frac{1}{r}$$

where r is the real compression ratio:

$$r = \frac{p_2 + p_c}{p_1} = \left(\frac{p_2}{p_1}\right) + \left(\frac{p_c}{p_1}\right)$$

Defining R as the apparent compression ratio:

$$R = \frac{p_2}{p_1}$$

and $p_r$ as the reduced capillary pressure:

$$p_r = \frac{p_c}{p_1}$$

we obtain:

$$r = R + p_r$$

and therefore:

$$x_v = 1 - \frac{1}{R + p_r}$$

The calculation can be extended from this value to the total volume of the food, defining the effective porosity $\varepsilon_{e'}$ as the fraction of the total volume of the food which is occupied by gas. The volumetric fraction, x, of liquid transferred is given by:

$$x = \varepsilon_e x_v$$

The value of x can be adjusted for each type food by means of an empirical equation of the following type:

$$x = K\left(1 - \frac{1}{R + p_r}\right) + x_o$$

which enables two characteristic parameters K and $x_o$ to be defined for each of them. Table 1 shows their values for the following types of fruit: papaya, mango, peach, apricot, banana, pear, pineapple and apple. The table also gives the experimental value, $x_{atm}$, of x which corresponds to the fruit at atmospheric pressure.

Given that

$$\varepsilon_e = \frac{x}{1 - \dfrac{1}{R + p_r}}$$

then:

$$\varepsilon_e = K + \frac{R + p_r}{1 - R - p_r}x_o$$

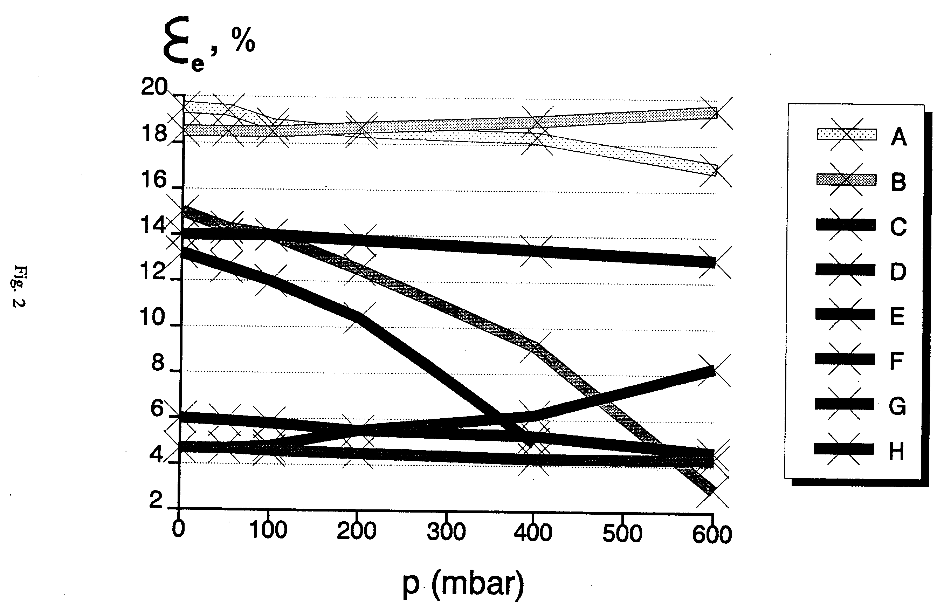

Figure 2 shows the value of $\varepsilon_e$ for the above mentioned fruits for values of $p_1$ of less than 600 mbar. Only in the case of mango and peach (curves C and E) is an increase in the value of the porosity $\varepsilon_{e'}$ observed as the pressure is reduced. This may possibly be due to the loss of native liquid during the stage of expansion and discharge of gas contained within the pores. Such a loss gives rise to an increase in the internal volume of pores available for the gas phase.

TABLE 1

| Values of $x_{atm}$, $x_o$, and K for each fruit | | | |
|---|---|---|---|
| Fruit | $x_{atm'}$, % | $x_o$, % | K, % |
| Papaya | 2.567' | 2.675 | 1.989 |
| Mango | 0.606 | -8.770 | 23.794 |
| Peach | 1.505 | -12.456 | 26.027 |
| Apricot | 1.453 | -0.159 | 4.961 |
| Banana | 0.571 | 0.496 | 18.336 |
| Pear | 1.767 | -0.615 | 14.724 |
| Pineapple | 0.001 | 0.851 | 6.796 |
| Apple | 2.280 | -1.721 | 21.248 |

**Material transfer stages**

The typical stages which take place during the process of submerging a porous solid in a liquid under vacuum conditions are:

Stage 1.- The solid is submerged in the liquid at atmospheric pressure.

Stage 2.- The working pressure is applied to the system ($p < p_{atm}$).

Stage 3.- The system is maintained at the working pressure for a time t. During this time the phenomena of material transfer and/or chemical reactions take place.

Stage 4.- The system is returned to atmospheric pressure. The solid is separated from the liquid.

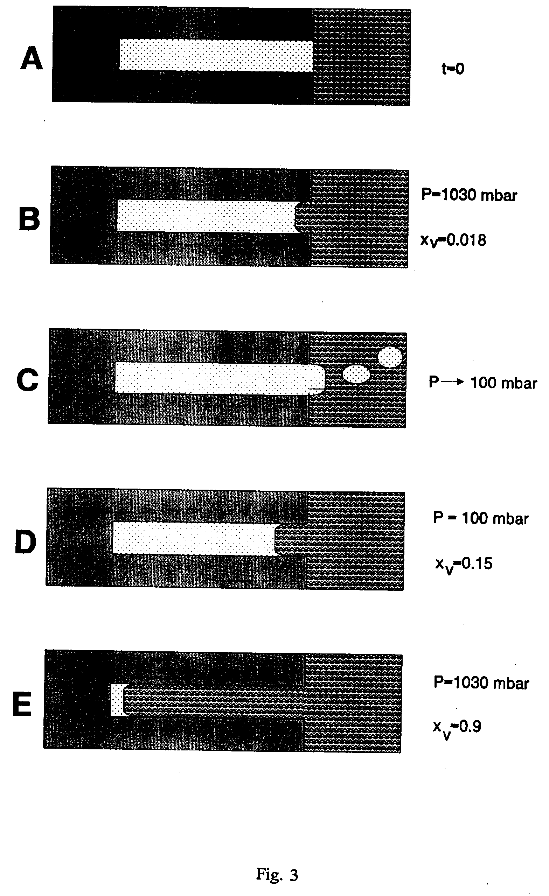

Figure 3 shows schematically the process which takes place inside a pore of the food (simplified to a cylinder) during the above mentioned phases. In order to quantify the effects, the value of x is shown on the right of the figure and corresponds to a Granny Smith apple ($p_c$ = 19 mbar, D = 160 $\mu$m and $\varepsilon_e$ = 0.22).

The first stage produces the situations represented by the letters A and B, in which the penetration of liquid due to the capillary effect is only $x_v$ = 0.018 which, in terms of the fraction of the total volume of the fruit, only represents a value of 0.396%.

The second stage (C and D) first causes the gas contained in the pores to expand. It is possible for some of the natural liquid of the food to leave (if there is any). Once the pressure of the system has equalized with the pressure of the gas, osmotic dehydration is produced and which now, according to the equation [11] and assuming a working pressure of 100 mbar, results in a value of $x_v$ of 0.15. It is important to observe that a reduction in the working pressure gives rise to more than a tenfold increase in the value of $x_v$. This is the state of the system during the third stage, although the situation is frequently complicated by the structural changes which take place during the process: the reduction in size and the resulting change in structure. This explains why the kinetics of the transfer of mass is faster when working in a vacuum than in the case of conventional osmosis. Firstly, this process contributes to the global transfer of liquid by means of said hydrodynamic effect when working in a vacuum. Secondly, the other mechanisms (diffusional and osmotic) are provided with a larger interface surface as a result of the greater occupation of the internal surface of the pores.

When the system is finally returned to atmospheric pressure, the hydrodynamic mechanism comes into play once more, this time as a result of the pressure gradient imposed by the change in external pressure (E). This time the effect is much greater, $x_v$ = 0.9. This means that a certain amount of liquid has been passed inside the food. In the case of apple, it represents 19.8% of the total volume of the fruit. It is important to point out that this the phenomenon can be controlled and furthermore is reversible, i.e. said liquid can come out again if the pressure is reduced as a result of the expansion of the gas which still remains trapped inside the pore.

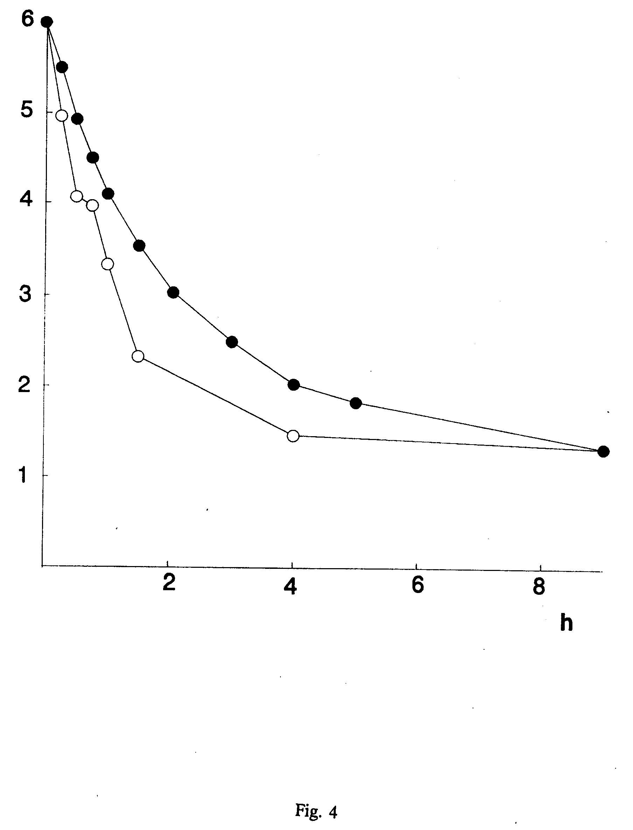

As has been said the net flow of mass transfer in the operation between the pores of the system and the liquid in which it is submerged is the result of the contribution of several mechanisms (osmotic, diffusional, etc.). Among them the **hydrodynamic model** plays an important part in terms of the total amount of mass transferred. Experimental results such as those of figure 4 are difficult to understand if the hydrodynamic contribution is ignored. Said figure shows the water loss of apple slices by osmotic dehydration at atmospheric pressure (curve A) and at pulsed vacuum (curve B): the difference in the ordinates of each curve corresponds to the water lost by osmotic dehydration; as can be seen the asymptotic value is reached in half the time which is required if no prior vacuum pulse is produced.

The principal advantage of pulsed vacuum osmotic dehydration compared with osmotic dehydration at atmospheric pressure is the transfer of mass due to the hydrodynamic process and the corresponding increase in the solid/liquid interface surface which is produced. The disadvantage is basically the higher cost of the equipment.

Considering that the most important hydrodynamic effect (figure 3, diagram E) is very fast and takes place at the moment when the system is returned to atmospheric pressure, the present invention proposes that the process of osmotic dehydration be carried out in pulsed vacuum conditions. In this way, whilst the product is submerged in the osmotic solution. it is subjected to short period of vacuum (for example 5 minutes). Afterwards, the material undergoes normal osmotic dehydration at atmospheric pressure. In this way the pores of the food are refilled with the same osmotic solution which was used at the beginning of the treatment, giving rise to many advantages over osmotic dehydration in vacuum. Among them it is worth mentioning the significant saving in the time during which the equipment is at vacuum, with the corresponding saving in equipment and the fact that the food is not "torn" by uselessly subjecting it to prolonged conditions of vacuum.

Figure 5 shows the results obtained with apricot at different temperatures and pressures. It is interesting to compare the results of loss of water loss and gain in solute at 40°C and at a vacuum of 70 mbar. The results obtained according to the present invention using 5 minute pulses at 70 mbar followed by the rest of the treatment at atmospheric pressure are only slightly lower than those obtained by the procedure of osmotic dehydration at vacuum, but much greater than those obtained atmospheric pressure. It is possible to use temperatures between 8 and 20°C lower and times of 2 to 4 times shorter than in the case of conventional osmotic dehydration.

**Equipment for pulsed osmotic dehydration**

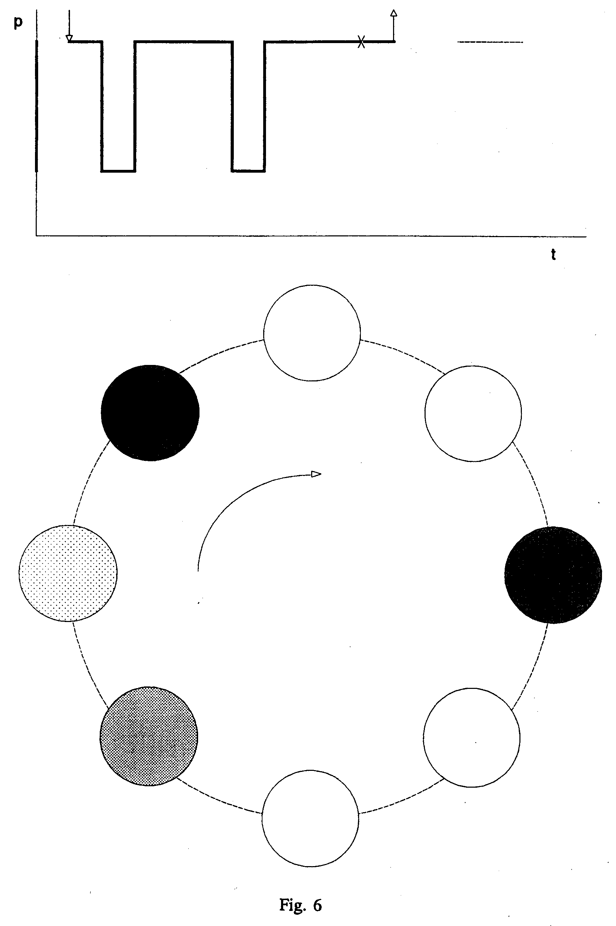

The upper part of figure 6 shows the pressure/time cycle during an alternating flow cycle. The lower part of the figure shows the application of this cycle to a chain (represented by the broken line) of dehydration tanks (represented by the circles) which move in the plane of the paper in the direction indicated by the arrow; the different types of shading represent each of the functions which are carried out during the process (in order to simplify the drawing only two positions of atmospheric pressure are shown for each position of vacuum, although it is understood that this proportion will be different depending on the type of operation to be carried out).

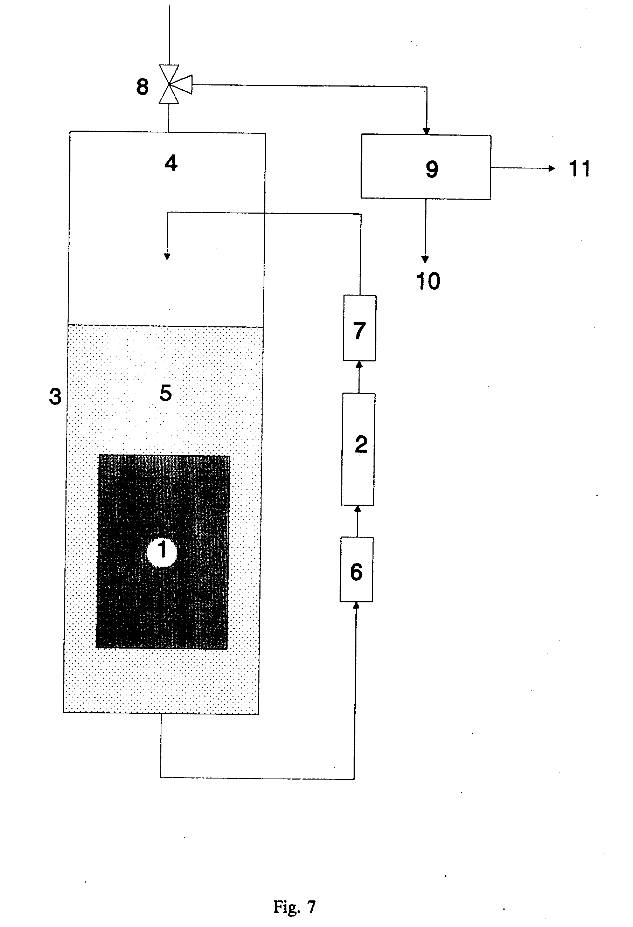

Figure 7 shows schematically the arrangement of the equipment used: the osmotic solution crosses a bed consisting of the food to be dehydrated, such that the water eliminated by the food is swept along by said solution which becomes diluted. Before the osmotic solution returns to the receptacle in which the food is located, it is made to pass through a heat exchanger [2] which provides the energy necessary to keep temperature constant. The solution returns to the region [4] of the tank [3] which is not occupied by the liquid [5]. The water to be eliminated from the solution can be removed (if necessary) by conventional methods (evaporation, reverse osmosis, dialysis, etc.) in [7]. As an option, a stage of sterilization of the solution can be included in [6].

In order to keep the concentration of the osmotic solution constant the pressure and temperature must be kept constant according to the equilibrium values of said solutions.

In some cases, especially in salting, the water contained by the pores has to be renewed, for which it is necessary to periodically repeat the vacuum pulses. The changes between vacuum and atmospheric pressure which correspond to the object of the present invention are produced by means of a timed system which operates a three-way valve [6]. The vapour produced during the periods of vacuum (and which contributes to the concentration of the solution) is extracted by [9] after having passed through a cooled condenser [8] which separates the condensate [10].

**EXAMPLES**

**Example 1. Pulsed osmotic dehydration equipment.**

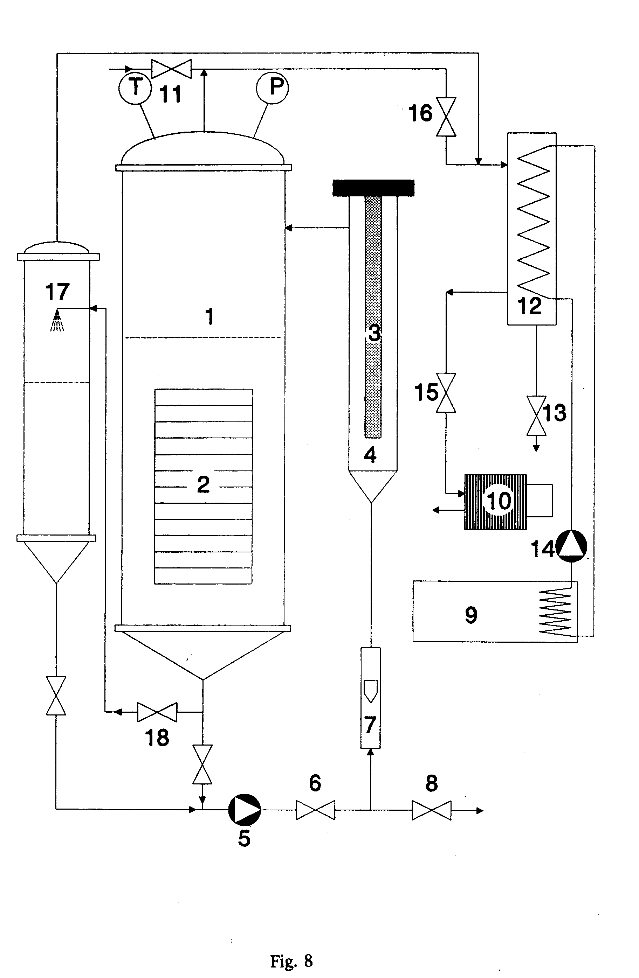

Figure 8 shows the full system for a piece of equipment capable of treating 10 to 20 kg of food. Given that it refers to an experimental installation only one fixed piece of equipment has been assembled.

The tank [1] consists basically if a cylinder which is 35 cm in diameter and 81 cm in height. In it are positioned 16 baskets [2] for holding the food, each of them with an internal diameter of 30 cm, 3.5 cm in height and with a stainless steel mesh.

The flowing osmotic solution which is heated by means of a heat exchanger [3] provided with a 4 kW electric heating element.

The osmotic solution is made to flow by means of an 8 to 10 m³ /h pump, whose rate of flow is measured by [7] and regulated by the valve [6]; the solution can be discharged by means of the valve [8].

The system is evacuated by means of a water ring pump [10] (positioned after the surface condenser [12]) which extracts the vapours and enables the condensate to be discharged through [13]. A refrigerating liquid provided by a refrigerating installation [9] is made to flow through the condenser coil by means of the pump [14].

A suitable automatic device enables the reactor [1] to be periodically depressurized by means of the valve [11], at the same time closing the valve [16].

The evaporation of the water extracted in the osmotic dehydration process takes place partly during the periods of vacuum, but the major proportion is achieved by flash evaporation in a cylinder [17] which the liquid reaches via a valve [18] controlled by the level of liquid in [17].

The system is controlled by adjusting the resistance [3] and the valve [15] by means of the pressure sensor P and temperature sensor T (which operate the corresponding servomechanisms). In this way the equipment automatically regulates the concentration of the solution since if it should become more dilute due to the water which is extracted, its vapour pressure increases and therefore, as the fixed external pressure is lower, the solution boils and the water is eliminated.

**Example 2. Obtaining pineapple preserve.**

The biggest drawbacks of the conventional process of preparing conserves are the changes in colour, texture, nutritional value and taste which are caused by the high temperature to which the product is subjected.

10 kg of fresh pineapple are put inside the reactor described in example 1. Sugar solution of 15 °Brix is loaded; 2.5 kg of sugar are added to increase the concentration of the solution to 70 °Brix and the temperature is adjusted to 38 - 40°C by recycling the solution through the heating resistance. When this temperature is reached a vacuum of 100 mbar is produced inside the reactor for 10 minutes, after which time the solution is kept flowing and the water evaporating for a further 100 minutes. 4 kg of condensate and 8.5 kg of treated product are obtained.

This product is mixed at a temperature of 20 - 25°C (room temperature) adding, as well as the 70 °Brix sugar solution (6.5 kg of sugar and 2.8 kg of water), a solution which contains: 0.1 kg of pectin, 2.1 kg of sugar, 0.01 kg of citric acid and 0.5 kg water.

This gives 20 kg of conserve which has: a soluble solution of 63 °Brix, a water content of 36 - 37%, a pH of 2.8 - 3.0 and a water activity of 0.76 - 0.79.

The characteristic values of this process are shown in Table II:

TABLE II

| Pineapple preserve | | | | |
|---|---|---|---|---|
| | Water | Soluble solids | Total solids | Total |
| Raw material | 8 | 1.5 | 2 | 10 |
| Dehydration | -4 | +2.5 | +2.5 | -1.5 |
| Dehydrated fruit | 4 | 4 | 4.5 | 8.5 |
| Pectin/sugar addition | +0.5 | +2.1 | +2.1 | +2.6 |
| Citric acid addition | | | +0.01 | |
| Sol. sugar addition (70 °Brix) | +2.8 | +6.5 | +6.5 | +9.3 |
| Final product | 7.3 | 12.6 | 13.11 | 20 |

**Example 3. Obtaining strawberry preserve.**

The procedure is the same as in example 2 using strawberry in place of pineapple. The results obtained are shown in Table III:

TABLE III

| Strawberry preserve | | | | |
|---|---|---|---|---|
| | Water | Soluble solids | Total solids | Total |
| Raw material | 9.1 | 0.8 | 0.9 | 10 |
| Dehydration | -2.5 | +2.2 | +2.2 | -0.3 |
| Dehydrated fruit | 6.6 | 3 | 3.1 | 9.7 |
| Pectin/sugar addition | +0.7 | +9.6 | +9.6 | +10.3 |
| Citric acid addition | | | +0.01 | |
| Final product | 7.3 | 12.6 | 12.71 | 20 |

(There is no final addition of sugar solution)

## Example 3. Curing cheese.

Three recently pressed "Manchego" type cheeses, each 3.5 kg in weight, are put into the apparatus described in example 1. Brine with 20% NaCl is used as the osmotic solution. A vacuum of 50 mbar is produced for 30 minutes and the system is then returned to atmospheric pressure (1030 mbar), after which the brine solution is kept flowing for 1 hour.

In this case it is not necessary to heat or evaporate the solution.

Analyzing the saline content of the cheese gives values which range between 4.2% near the perimeter to 1.2% in the centre, with an average value of 2.8%.

The cycle of vacuum and atmospheric pressure is repeated to obtain 4.5% NaCl at the perimeter and 1.7% in the centre, increasing the average value to 3.1%.

## DESCRIPTION OF THE DRAWINGS

### Figure 1. Hydrodynamic model of an ideal pore.

[1] Solid food
[2] Gas which fills the interior of the pore
[3] Osmotic solution
$G\rightarrow$ Gas
$\leftarrow L$ Liquid

The upper figure represents the situation at the start of the process (t-0). The initial pressure of the gas inside the pore is, $p_{i0}$, is lower than the external pressure of the liquid, $p_e$, which in turn is the sum of the system pressure $p_2$ and the capillary pressure $p_c$.

The lower figure represents the equilibrium situation (t=$t_{eq}$) in which the pressure inside the pore, $p_i$, and the external pressure $p_c$ have been equalized.

### Figure 2. Values of effective porosity at different pressures for various type of fruit.

Y-axis: Effective porosity, $e_e$ .
X-axis: Pressure in mbar at which $e_e$ was measured.
**A** Apple
**B** Banana
**C** Mango
**D** Pear
**E** Peach
**F** Pineapple
**G** Papaya

**H** Apricot

**Figure 3**. **Typical stages during the operation of transfer of mass between a pore of food submerged in a liquid under conditions of vacuum. Situation of an ideal pore.**

**A** Pore with gas. No liquid inside.

**B** Hydrodynamic situation for P = 1030 mbar in which there is only capillary action. The value of $x_v$ is 0.018 (1.8%).

**C** The pressure P is changed to 100 mbar. The gas expands and some leaves the pore.

**D** Hydrodynamic situation for P = 100 mbar in which there is only capillary action. The value of $x_v$ is 0.15 (15%).

**E** Atmospheric pressure is reestablished (P = 1030 mbar). Capillary action and the external pressure constitute the determining forces.

Solid          Gas          Liquid

**Figure 4**. **Loss of water by osmotic dehydration in slices of apple at 50°C.**

Y axis: kg of water per kg of dry matter.

X-axis: Time in hours.

○ At atmospheric pressure

● Having previously produced a vacuum pulse for 5 minutes.

**Figure 5**. **Loss of water from chopped pineapple under different conditions.**

Y-axis:          Loss in weight in kg of water per kg of fresh fruit.

X-axis:          Time in hours.

**A** At 35°C at normal pressure (1030 mbar).

**B** At 40°C at normal pressure (1030 mbar).

**C** With pulsed vacuum (70 mbar) at 35°C.

**D** In a vacuum (70 mbar) at 35°C.

**Figure 6.** **Operational diagram of the alternating flow equipment.**

Upper part: Pressure (p) / Time (t) diagram.

Lower part: Diagram of the operations to be carried out in a semi-continuous cycle.

Load          Unload          Vacuum          No vacuum

↓ Loading of tank

**X** End of operation

↑ Unloading of tank

**Figure 7.** **Block diagram of the pulsed vacuum osmotic dehydration device.**

[1] Basket containing the product to be dehydrated.

[2] Heat exchanger

[3] Dehydration container

[4] Empty space

[5] Osmotic solution

[6] Three-way valve for intermittent intake of external air.

[7] Atomizer

[8] Condenser

[9] Vacuum

[10] Condensate

**Figure 8. Flow diagram of the pulsed vacuum osmotic dehydration device.**

[1] Dehydration tank
[2] Baskets with the material to be dehydrated
[3] Electrical resistance
[4] Heat exchanger
[5] Pump
[6] Flow control value
[7] Flowmeter (variable area flowmeter)
[8] Discharge valve
[9] Refrigeration equipment
[10] Vacuum pump (water ring pump)
[11] Valve for controlling pressure and intermittent air intake into [1]
[12] Refrigerant
[13] Condensate outlet valve
[14] Refrigerant fluid circulation pump
[15] Vacuum regulation valve (controlled by P)
[16] Pulsed vacuum shut-off valve for [1]
[17] Flash evaporator
[18] Valve for maintaining level in [17]

## Claims

1. An alternating flow procedure for improving liquid exchanges in food products which employs the osmotic dehydration of the food making use of a vacuum and giving rise to the exchange of water and solutes between the food and a surrounding liquid medium, characterized in that the exchange of water and solutes between the food and a surrounding liquid medium are produced by means of a controlled alternating change of pressures; vacuum is used to drive the air out of the pores and refill them at the end of the process and the changes in pressure are used as a means of pumping the solution to or from the interior of the pores, it being possible to carry out said pumping once (in general in the case of preserves) or repeatedly (in the case of salting food).

2. An alternating flow procedure for improving liquid exchanges in food products according to claim 1, characterized in that the duration of each vacuum pulse is 1/2 or less than the duration of the process, which is between 1 and 10 hours.

3. An alternating flow procedure for improving liquid exchanges in food products according to claims one and two, characterized in that the working temperatures are preferably between 8 and 20°C lower than in the case of conventional processes, thereby providing a considerable improvement in terms of maintaining the taste, aroma and nutritional components.

4. An alternating flow procedure for improving liquid exchanges in food products according to claims one to three, characterized in that the vacuum the intermittently applied vacuum (vacuum pulses) corresponds preferably to a absolute pressure of between 50 and 150 mbar.

5. Equipment for the exchanges of water and solute in food products according to claims one to four, consisting of one or several hermetic tanks into which the product to be treated is loaded, characterized in that the liquid with the solute which is to be exchanged is made to flow through the tank pre-heated to the pre-determined temperature and wherein the water which has been extracted from the food is eliminated by conventional processes (for example by flash evaporation), maintaining the concentration of the solute constant.

6. Equipment for the exchanges of water and solute in food products according to claim 5, characterized in that when the process is carried out semi-continuously said equipment consists of one tank for loading, another tank for unloading, one or several tanks in which the conditions of vacuum are produced and at least two tanks (which operate at atmospheric pressure) for each one that operates at a vacuum. These tanks are rotated by means of a conventional drive system such that the corresponding operations can be carried out in each one.

7. Equipment for the exchanges of water and solute in food products according to claims 5 and 6, characterized in that, as an option, a continuous sterilization system is included in the circuit for recirculating the osmotic pressure.

$t = 0$
$p_{lo} < p_e$

$t = t_{eq}$
$p_i = p_e$

Fig. 1

Fig. 2

A                                                                t=0

B                                                                P=1030 mbar

                                                                 x$_V$=0.018

C                                                                P $\longrightarrow$ 100 mbar

D                                                                P = 100 mbar

                                                                 x$_V$=0.15

E                                                                P=1030 mbar

                                                                 x$_V$=0.9

Fig. 3

Fig. 4

Fig. 5

Fig. 6

Fig. 7

Fig. 8